# EUROPEAN PATENT APPLICATION

(11) **EP 1 855 477 A1**
(43) Date of publication of application: **14.11.2007**
(21) Application number: 06009833.2
(22) Date of filing: 12.05.2006
(51) Int. Cl.: H04N 7/173

(54) **Audio/video signal-sharing device**

(71) Applicant: TELLINK COMM. LTD., Taipei 105 (TW)
(72) Inventor: Hou, Chien-Chung Telly, Songshan District Taipei 105 (TW); Huang, Hsien-Chao, Songshan District Taipei 105 (TW)
(74) Representative: Casalonga, Axel

(57) **Abstract**

The present invention discloses an audio/video signal-sharing device (2), wherein an A/V (audio/video) signal-receiving unit (4) receives A/V signals and transmits the A/V signals to a data-processing unit (6) for processing; an A/V signal-outputting unit (8) receives the processed A/V signals and outputs the A/V signals to a display device (12); further, the audio/video signal-sharing device of the present invention can respond to a request of a far end and transmits A/V signals to the data-processing unit, and the processed A/V signals are transmitted to a network-processing unit (10), and the network-processing unit transmits the A/V signals to the far end via a network (14); furthermore, the audio/video signal-sharing device of the present invention can receive far-end A/V signals from a far end, and the far-end A/V signals are transmitted to the data-processing unit for processing, and the A/V signal-outputting unit receives the processed A/V signals and outputs the A/V signals to the display device. Therefore, the users residing at different places can utilize the audio/video signal-sharing devices disclosed in the present invention to arbitrarily share other party's A/V signals.

## Description

The present invention relates to an audio/video signal-processing device, particularly to an audio/video signal-sharing device, whereby the user can actively determine the A/V signals to be transmitted to a far end or to be received from a far end via a network.

For most people, watching TV is an important recreation. TV programs can provide not only entertainment but also news and knowledge for people.

However, the provided TV programs vary with localities and TV stations. Thus, a viewer may be unable to watch the TV programs he intends to watch. For example, owing to the localism of TV programs, the viewers dwelling in Taiwan are hard to watch live USA TV programs in real time, and vice versa. Thus, for those living in a foreign land, such as those who are traveling, studying, and working overseas, it is hard to acquire the current affairs of their hometown via familiar TV programs.

To solve the abovementioned problems, there are web TV programs provided by web TV program providers, which is advantaged in none locality limit but disadvantaged in the likelihood of bandwidth blocking and inferior image quality. Further, the user cannot arbitrarily determine the far-end TV programs he intends to watch but can only passively select from the TV programs provided by web TV program providers.

Therefore, to solve the abovementioned problems, the present invention proposes an audio/video signal-sharing device, whereby the user can arbitrarily share A/V signals with other parties as he wishes.

The primary objective of the present invention is to provide an audio/video signal-sharing device, whereby the user can actively determine the A/V signals to be transmitted to a far end or to be received from a far end via a network.

Another objective of the present invention is to provide an audio/video signal-sharing device, whereby the users residing at different places can arbitrarily share other party's A/V signals without the scruple of mutual interference.

Further another objective of the present invention is to provide an audio/video signal-sharing device, which can provide an A/V signal-sharing service for a receiving device via connecting to a home network with a Universal Plug and Play interface.

According to the present invention, the audio/video signal-sharing device comprises: an AN signal-receiving unit, receiving AN signals; a data-processing unit, receiving the AN signals output by the AN receiving unit, and processing the A/V signals; and an AN signal-outputting unit, receiving the processed A/V signals, and outputting the A/V signals to a display device. Further, the audio/video signal-sharing device of the present invention can respond to a request of a far end and transmit AN signals to the data-processing unit, and the processed AN signals is transmitted to a network-processing unit, and the network-processing unit transmits the AN signals to the far end via a network. Furthermore, the network-processing unit can receive far-end A/V signals from a far end via a network, and the far-end AN signals is transmitted to the data-processing unit, and the AN signal-outputting unit receives the processed AN signals and outputs the AN signals to the display device. The AN signal-receiving unit further comprises a first signal-receiving unit and a second signal-receiving unit, which respectively receive a first A/V signal and a second A/V signal. The AN signal-outputting unit receives the first A/V signal and outputs the first A/V signal to the display device. The network-processing unit responds to the request of the far end and transmits the second AN signal to the far end via a network.

To enable the objectives, technical contents, characteristics, and accomplishments of the present invention to be more easily understood, the embodiments of the present invention are to be described in detail in cooperation with the attached drawings below.
- Fig.1: is a diagram schematically showing an architecture according to the present invention.
- Fig.2: is a diagram schematically showing that the present invention outputs A/V signals to the display device.
- Fig.3: is a diagram schematically showing that the present invention transmits A/V signals to a far end.
- Fig.4: is a diagram schematically showing that the present invention receives A/V signals from a far end.
- Fig.5: is a diagram schematically showing that the present invention implements the sharing of A/V signals with a Universal Plug and Play processing controller.
- Fig.6: is a flowchart of the A/V signal receiving process according to the present invention.
- Fig.7: is a flowchart of the A/V signal transmitting process according to the present invention.
- Fig.8: is a diagram schematically showing an embodiment of the present invention.

The present invention discloses an audio/video signal-sharing device, whereby users can share A/V signals with other parties according to their own selections.

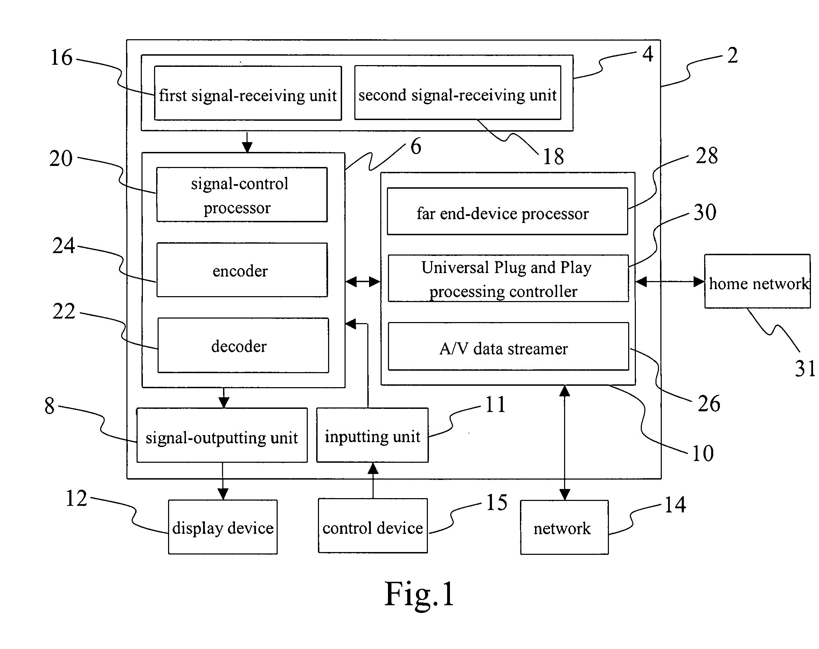

Refer to Fig.1 a diagram schematically showing an architecture according to the present invention. As shown in Fig.1, the audio/video signal-sharing device 2 comprises: at least one A/V signal-receiving unit 4, used to receive at least one A/V signal, such as the signals of a digital TV. The signal-receiving unit 4 is coupled to a data-processing unit 6, and the data-processing unit 6 is further separately coupled to an A/V signal-outputting unit 8, a network-processing unit 10, and an inputting unit 11. The audio/video signal-sharing device 2 connects with a display device 12, such as a TV, via the A/V signal-outputting unit 8, and thereby, the A/V signals can be presented on the display device 12. The audio/video signal-sharing device 2 receives/transmits A/V signals with the network-processing unit 10 and via a network 14. The inputting unit 11 receives the instructions sent out by a control device 15 and controls the data-processing unit 6 to perform corresponding processing according to the instructions.

As shown in Fig.1, the A/V signal-receiving unit 4 further comprises: a first signal-receiving unit 16, used to receive a first A/V signal; and a second signal-receiving unit 18, used to receive a second A/V signal. The data-processing unit 6 further comprises: a signal-control processor 20; a decoder 22, coupled to the signal-control processor 20, and decoding A/V signals; and an encoder 24, coupled to the signal-control processor 20, and encoding A/V signals. The network-processing unit 10 further comprises: an A/V data streamer 26, performing multiplexing/demultiplexing and encapsulation/decapsulation processing, and performing network-status monitoring; and a far end-device processor 28, controlling the actions of the AN data streamer 26. A Universal Plug and Play processing controller 30 may also be installed to the network-processing unit 10, and thereby, the audio/video signal-sharing device 2 can be connected to a home network 31 and becomes a member of the home network 31 so that a receiving device 32, such as a computer, a mobile phone or a personal digital assistant, may has the service provided by the audio/video signal-sharing device 2, or the receiving device 32 may utilize the audio/video signal-sharing device 2 to perform data transmission via the network 14.

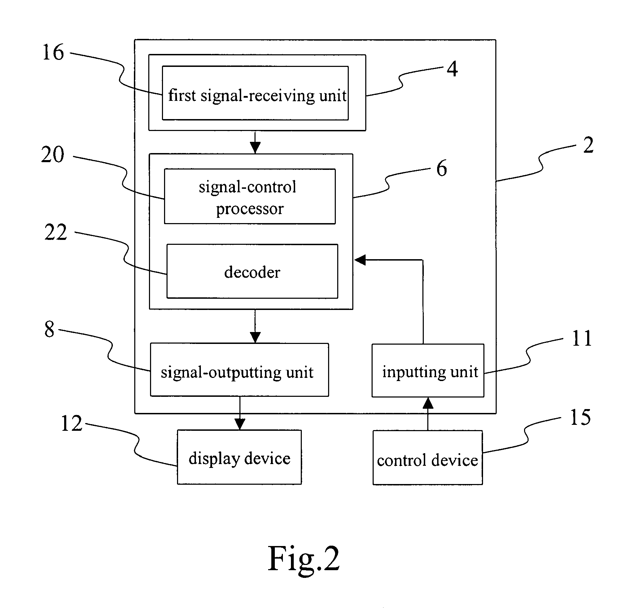

Refer to Fig.2 a diagram schematically showing that the present invention receives an A/V signal and outputs the A/V signal to the display device. As shown in Fig.2, when the display device 12 is coupled to the audio/video signal-sharing device 2 via the A/V signal-outputting unit 8, the control device 15 sends instructions to the audio/video signal-sharing device 2, and the inputting unit 11 receives the instructions and sends the instructions to the data-processing unit 6, and according to the instructions, the signal-control processor 20 of the data-processing unit 6 controls the first signal-receiving unit 16 of the A/V signal-receiving unit 4 to receive a first A/V signal and send the first A/V signal to the data-processing unit 6; next, the signal-control processor 20 controls the decoder 22 to decode the first A/V signal; next, the decoded first A/V signal is sent to the A/V signal-outputting unit 8; next, the A/V signal-outputting unit 8 outputs the first A/V signal to the display device 12, and then, the first A/V signal is displayed on the display device 12. In this embodiment, the present invention is simply used to output A/V signals to the display device 12.

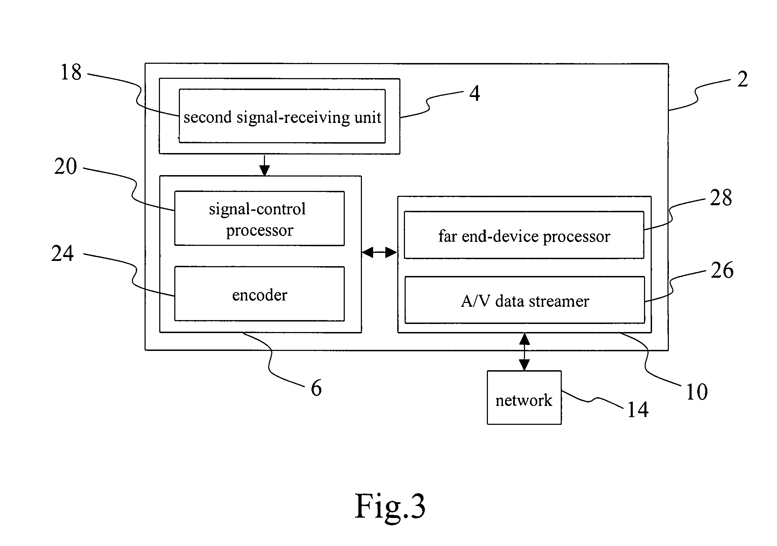

In addition to being able to process and output the received A/V signals to the display device, the audio/video signal-sharing device 2 may respond to the request of a user in a far end and transmit A/V signals to the far end via the network-processing unit 10 and the network 14, such as the Internet or a local area network. Refer to Fig.3 a diagram schematically showing that the present invention transmits A/V signals to a far end. When the far end-device processor 28 of the network-processing unit 10 of the audio/video signal-sharing device 2 receives a request from a far end, the signal-control processor 20 controls the second signal-receiving unit 18 to receive a second A/V signal according to the message received by the far end-device processor 28. Next, after the second A/V signal has been sent to the data-processing unit 6, the signal-control processor 20 further controls the encoder 24 to encode the second A/V signal. Next, the encoded second A/V signal is sent to the network-processing unit 10, and the far end-device processor 28 controls the A/V data streamer 26 to perform multiplexing and encapsulation processings on the second A/V signal. Then, the second A/V signal is transmitted to the far end via the network 14, and the second A/V signal can be displayed in real-time in the far end. In the meanwhile, the audio/video signal-sharing device 2 can still undertake the action shown in Fig.2-output A/V signals to the display device 12, i.e. the audio/video signal-sharing device 2 can still undertake the following steps: according to the instructions sent out by the control device 15, the audio/video signal-sharing device 2 controls the first signal-receiving unit 16 to receive a first A/V signal and send the first A/V signal to the data-processing unit 6; the signal-control processor 20 controls the decoder 22 to decode the first AN signal; the decoded A/V signal is sent to the A/V signal-outputting unit 8; and the A/V signal-outputting unit 8 outputs the first AN signal to the display device 12. In the present invention, the first A/V signal and the second A/V signal are not necessarily different, i.e. the first A/V signal and the second A/V signal may be identical or different. Further, the first signal-receiving unit 16 and the second signal-receiving unit 18 may be integrated into a single receiving unit.

In the present invention, it is unnecessary for a far-end user to scruple whether the audio/video signal-sharing device 2 is outputting the first A/V signal to the display device 12 simultaneously. Therefore, the present invention is advantaged in that there is no mutual interference existing.

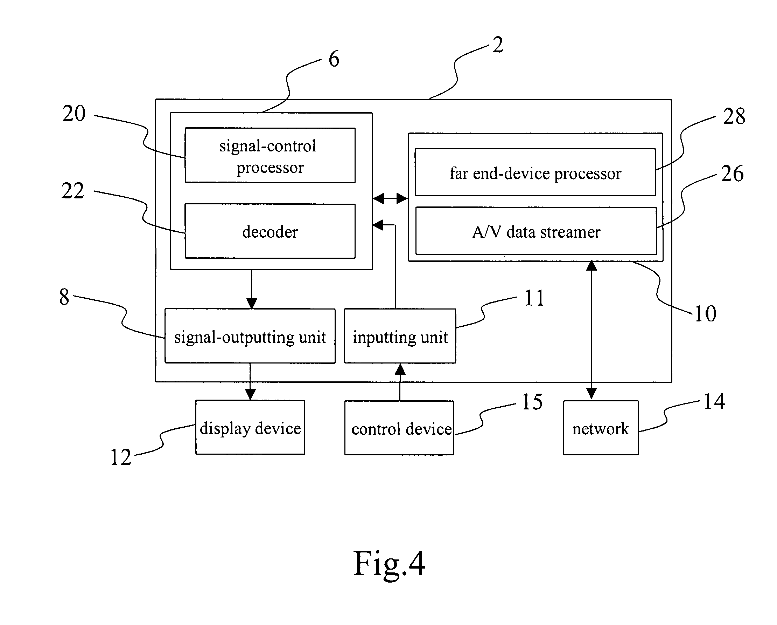

Refer to Fig.4 a diagram schematically showing that the present invention receives A/V signals from a far end. The user of the display device 12 may also utilize the audio/video signal-sharing device 2 to receive A/V signals, such as digital TV signals, from a far end, and the process thereof is to be described below. When the user of the display device 12 utilizes the control device 15 to give the audio/video signal-sharing device 2 an instruction for receiving far-end A/V signals, the instruction will be received by the inputting unit 11 and then sent to the data-processing unit 6. The signal-control processor 20 controls the far end-device processor 28 of the network-processing unit 10 to transmit the instruction to the far end via the network 14. According to the instruction, the far end transmits far-end A/V signals to the network-processing unit 10 via the network 14. The A/V data streamer 26 performs the demultiplexing and decapsulation processings on the far-end A/V signals. Next, the far-end A/V signals are sent to the data-processing unit 6. Next, the signal-control processor 20 controls the decoder 22 to decode the far-end A/V signals, and the decoded far-end A/V signals are sent to the A/V signal-outputting unit 8. Then, the far-end A/V signals are sent to the display device 12 by the AN signal-outputting unit 8 and presented on the display device 12. In the meanwhile, the far end can still undertake the action shown in Fig.3, i.e. the far end utilizes the audio/video signal-sharing device 2 to receive the second A/V signal. Therefore, in the present invention, the users can arbitrarily share A/V signals with other parties without the scruple of mutual interference.

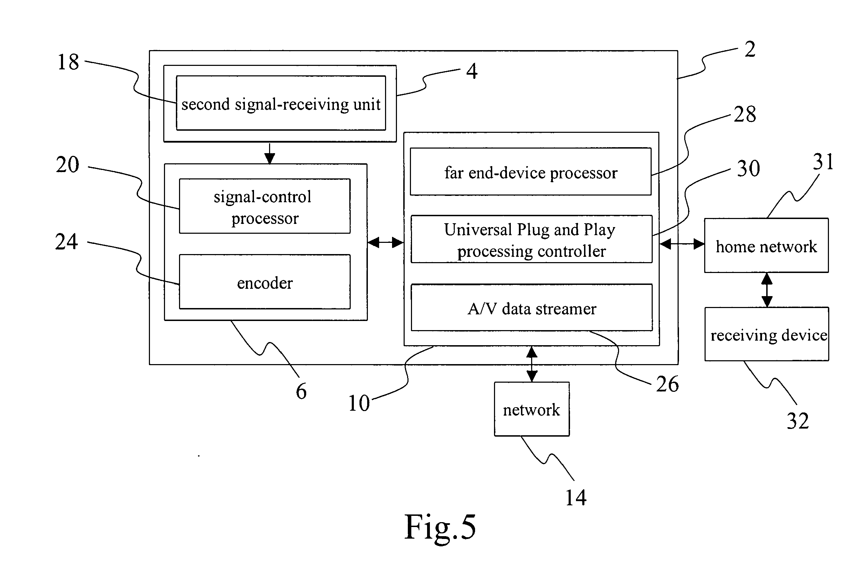

Refer to Fig. 5 a diagram schematically showing that the present invention implements the sharing of A/V signals with a Universal Plug and Play processing controller 30. Via the Universal Plug and Play standard, the audio/video signal-sharing device 2 becomes a member of the home network. Thus, a receiving device 32 may receive A/V signals or far-end A/V signals via the audio/video signal-sharing device 2. The receiving device 32 may also transmit its multimedia signals to the audio/video signal-sharing device 2 via the Universal Plug and Play standard, and then, the multimedia data may be displayed on the display device 12 or transmitted to a far end. When the receiving device 32 connects with the home network 31 by the Universal Plug and Play standard, the receiving device 32 can further connects with the audio/video signal-sharing device 2. According to the request of the receiving device 32, the audio/video signal-sharing device 2 controls the second signal-receiving unit 18 to receive a second A/V signal and send the second A/V signal to the data-processing unit 6; the signal-control processor 20 controls the decoder 22 to decode the second A/V signal. Next, the decoded second A/V signal is sent to the network-processing unit 10, and the A/V data streamer 26 performs the multiplexing, encapsulation and network-monitoring processings on the second A/V signal. Then, the second A/V signal is transmitted to the receiving device 32. The receiving device 32 may also demand the audio/video signal-sharing device 2 to receive far-end A/V signals from a far end and then transmit the far-end A/V signals to the receiving device 32. In the meanwhile, any one of those actions described in this paragraph does not influence the action that the audio/video signal-sharing device 2 outputs the first A/V signals to the display device 12, or the action that the audio/video signal-sharing device 2 receives far-end A/V signals from a far end and outputs the far-end A/V signals to the display device 12.

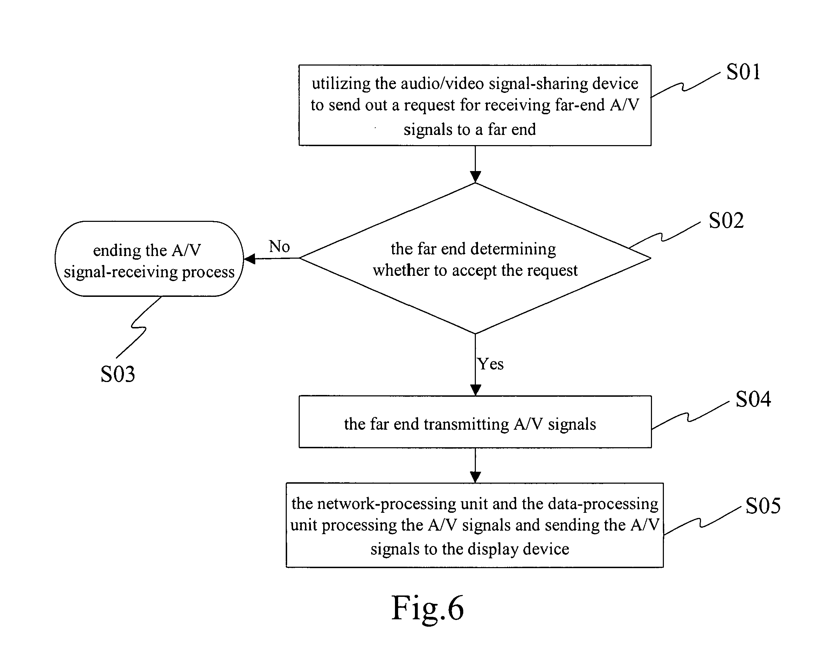

Refer to Fig.6 the flowchart of the A/V signal-receiving process according to the present invention. In Step S01, the user utilizes the audio/video signal-sharing device to send out a request for receiving far-end A/V signals to a far end. In Step S02, the far end determines whether to accept the request. If the far end does not accept the request, the process proceeds to Step S03, and the A/V signal-receiving process is ended. If the far end accepts the request, the process proceeds to Step S04, and the far end transmits the A/V signals the user selects or the A/V signals the far end is sharing to the audio/video signal-sharing device via a network. In Step S05, the far-end A/V signals are processed by the network-processing unit and the data-processing unit and then sent to the display device.

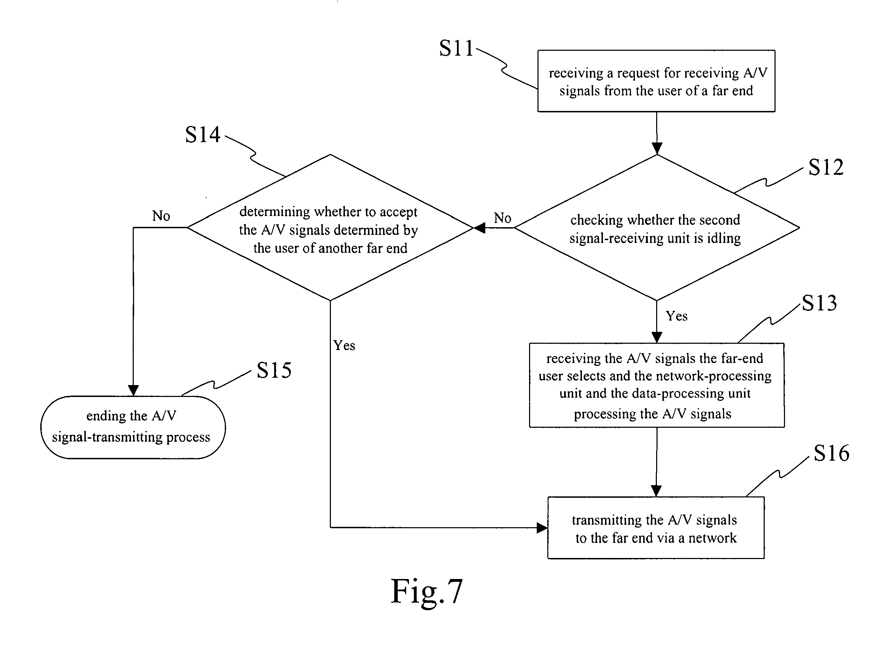

Refer to Fig.7 the flowchart of the AN signal-transmitting process according to the present invention. In Step S 11, the user of a far end sends out a request for receiving A/V signals to the audio/video signal-sharing device. In Step S 12, the data-processing unit checks whether the second signal-receiving unit of the A/V signal-receiving unit is idling, i.e. checks whether the second signal-receiving unit is undertaking an A/V signal transmission demanded by the user of another far end. If the second signal-receiving unit is idling, the far-end user can actively determine the A/V signals the second signal-receiving unit will receive, and the process proceeds to Step S13. In Step S13, the data-processing unit controls the second signal-receiving unit to receive the A/V signals the far-end user selects; the received A/V signals are sent to the data-processing unit for encoding, and then, sent to the network-processing unit for multiplexing, encapsulation, and network-monitoring processings; and then, the process proceeds to Step S16. In Step S16, the A/V signals selected by the far-end user are transmitted to the far end via a network. If the second signal-receiving unit is not idling, it means that the far-end user cannot actively determine the A/V signals the second signal-receiving unit is receiving, and that the far-end user can only passively accept the A/V signals determined by the user of another far end; then, the process proceeds to Step 14. In Step S 14, the far end-device processor feeds back a query to the far-end user: whether to accept the A/V signals determined by the user of another far end. If the far-end user accepts the A/V signals, the process proceeds to Step S16, and the A/V signals selected by the user of another far end are transmitted to the far end. If the far-end user refuses to accept the A/V signals selected by the user of another far end, the process proceeds to Step S 15, and the process is ended.

In the present invention, the audio/video signal-sharing device may further have a memory card-reading device, whereby the data of a memory card installed inside the memory card-reading device can be output to the display device. The data of the memory card may also be output to the receiving device via the Universal Plug and Play interface and the home network, and the data of the memory card may also be transmitted to a far end via the network. In the present invention, the audio/video signal-sharing device may further have a VoIP (Voice over Internet Protocol) unit and a VolP phone, and then, the users can communicate with VoIP phones. In the present invention, the audio/video signal-sharing device may further have an IM (Instant Message) protocol unit, and then, the user can communicates with a far-end via instant messages. Besides, the audio/video signal-sharing device of the present invention may be an independent device or a device built inside the display device.

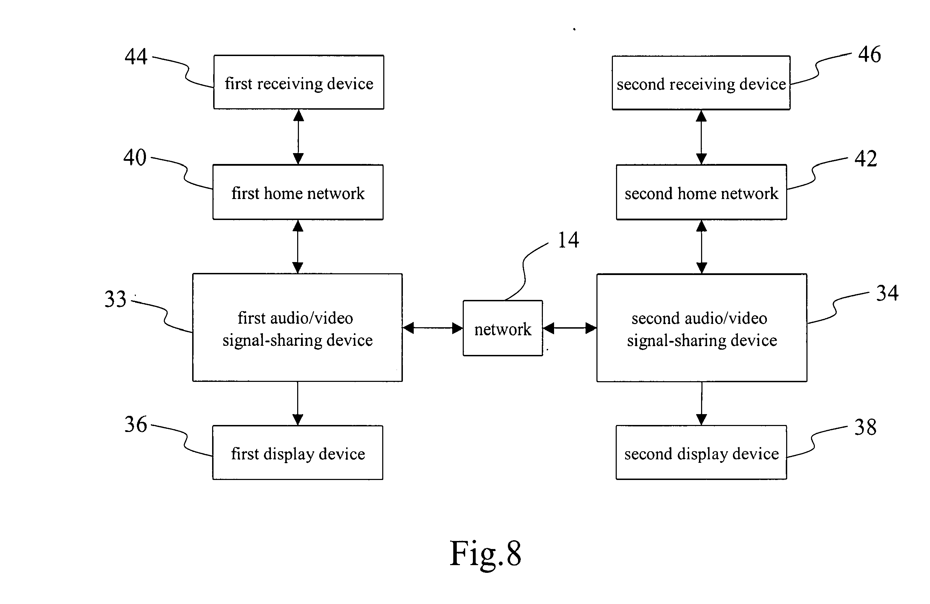

To enable the present invention to be more easily understood, an embodiment of the present invention is to be described below. Refer to Fig.8. A first user living in Taiwan and a second user living in USA separately have a first audio/video signal-sharing device 33 and a second audio/video signal-sharing device 34. The first user and the second user can respectively utilize the first audio/video signal-sharing device 33 and the second audio/video signal-sharing device 34 to receive Taiwan and USA local TV programs. The program signals are respectively output to a first display device 36 and a second display device 38 or respectively transmitted to a first receiving device 44 and a second receiving device 46 via a first home network 40 and a second home network 42. When the first user living in Taiwan intends to watch a USA local TV program, he can utilize the first audio/video signal-sharing device 33 to send the request to the second audio/video signal-sharing device 34. The second audio/video signal-sharing device 34 will transmit the USA local TV program the first user selects to the first audio/video signal-sharing device 33 via a network 14, and then, the USA local TV program can be displayed on the display device 36 or transmitted to the first receiving device 44 via the first home network 40. The action that the second audio/video signal-sharing device 34 transmits the USA local TV program to the first audio/video signal-sharing device 33 via the network 14 does not influence the action that the second user utilizes the second audio/video signal-sharing device 34 to receive a USA local TV program determined by the second user and then output the USA local TV program to the display device 38. When the first user intends to request a transmission of a USA local TV program from the second audio/video signal-sharing device 34, it is unnecessary for him to scruple whether the second audio/video signal-sharing device 34 is receiving a local TV program and transmitting the local TV program to the second display device 38. Similarly, when the second user living in USA intends to watch a Taiwan local TV program, he can utilize the second audio/video signal-sharing device 34 to send the request to the first audio/video signal-sharing device 33. The rest of the procedures resemble those described above and will not be repeated here.

Therefore, the audio/video signal-sharing device disclosed in the present invention can solve the problem that the user cannot arbitrarily select a far-end AN signal to watch with the conventional technologies. Further, via the present invention, the user can actively determine the A/V signals to be transmitted to a far end or to be received from a far end via a network without the scruple of mutual interference.

Those embodiments described above are to clarify the present invention to enable the persons skilled in the art to understand, make, and use the present invention; however, it is not intended to limit the scope of the present invention, and any equivalent modification and variation according to the spirit of the present invention is to be also included within the scope of the claims stated below.

## Claims

1. An audio/video signal-sharing device, comprising:
At least one A/V (audio/video) signal-receiving unit, receiving at least one AN signal;
a data-processing unit, coupled to said A/V signal-receiving unit, and processing said A/V signal;
an A/V signal-outputting unit, coupled to said data-processing unit, and outputting said A/V signal to a display device; and
a network-processing unit, coupled to said data-processing unit, responding to a request of a far end, controlling said data-processing unit to process said A/V signal, and transmitting the processed A/V signal to said far end via a network; or receiving a far-end A/V signal from said far end via said network, sending said far-end A/V signal to said data-processing unit, and controlling said data-processing unit to process said far-end A/V signal and send the processed far-end A/V signal to said A/V signal-outputting unit for outputting to said display device.

2. The audio/video signal-sharing device according to claim 1, wherein said A/V signal-receiving unit further comprises: a first signal-receiving unit, receiving a first A/V signal; and a second signal-receiving unit, receiving a second A/V signal; said first A/V signal may be output to said display device by said A/V signal-outputting unit; in response to said request of said far end, said second A/V signal may be transmitted to said far end via said network-processing unit and said network.

3. The audio/video signal-sharing device according to claim 1, wherein said A/V signal is a television signal.

4. The audio/video signal-sharing device according to claim 3, wherein said television signal is a digital television signal.

5. The audio/video signal-sharing device according to claim 1, wherein said display device is a television.

6. The audio/video signal-sharing device according to claim 1, wherein said far-end A/V signal is a television signal.

7. The audio/video signal-sharing device according to claim 6, wherein said television signal is a digital television signal.

8. The audio/video signal-sharing device according to claim 1, wherein said data-processing unit further comprises:
an encoder, encoding said A/V signal, and sending the encoded A/V signal to said network-processing unit;
a decoder, decoding said A/V signal or said far-end A/V signal, and sending the decoded A/V signal or far-end A/V signal to said A/V signal-outputting unit; and
a signal-control processor, controlling said decoder to decode said A/V signal and send the decoded A/V signal to said A/V signal-outputting unit; controlling said encoder to encode said A/V signal and send the encoded A/V signal to said network-processing unit; and controlling said decoder to decode said far-end A/V signal and send the decoded far-end AN signal to said A/V signal-outputting unit.

9. The audio/video signal-sharing device according to claim 1, wherein said network-processing unit further comprises:
an A/V data streamer, performing multiplexing/demultiplexing and encapsulation/decapsulation processings, and performing network-status monitoring; and
a far end-device processor, coupled to said A/V data streamer, and controlling said A/V data streamer to perform multiplexing and encapsulation processings on said AN signal and transmit the processed A/V signal to said far end via said network; or receiving said far-end A/V signal via said network, sending said far-end A/V signal to said A/V data streamer, and controlling said A/V data streamer to perform demultiplexing and decapsulation processings on said far-end A/V signal.

10. The audio/video signal-sharing device according to claim 1, wherein said network-processing unit further comprises: a Universal Plug and Play processing controller, wherein said Universal Plug and Play processing controller connects with a home network according to the Universal Plug and Play standard and transmits said A/V signal or said far-end A/V signal to a receiving device; said Universal Plug and Play processing controller may also receive a multimedia signal from said receiving device and transmits said multimedia signal to said far end or transmits said multimedia signal to said data-processing unit for processing, and the processed multimedia signal is transmitted to said A/V signal-outputting unit.

11. The audio/video signal-sharing device according to claim 10, wherein said Universal Plug and Play processing controller provides a network transmission function for said receiving device.

12. The audio/video signal-sharing device according to claim 10 or claim 11, wherein said receiving device may be a portable device, a computer, or a personal digital assistant.

13. The audio/video signal-sharing device according to claim 1, wherein said far end also has said audio/video signal-sharing device to receive said A/V signal sent out by said network-processing unit via said network or to transmit said far-end A/V signal to said network-processing unit via said network.

14. The audio/video signal-sharing device according to claim 1, wherein said network may be the Internet or a local area network.

15. The audio/video signal-sharing device according to claim 1, further comprising a memory card-reading device, whereby the data of a memory card installed inside said memory card-reading device can be output to said display device or transmitted to said far end via said network.

16. The audio/video signal-sharing device according to claim 1, further comprising a VoIP (Voice over Internet Protocol) unit, which can cooperate with a VoIP phone to provide VoIP service.

17. The audio/video signal-sharing device according to claim 1, further comprising an IM (Instant Message) protocol unit, which enables the exchange of instant messages between said audio/video signal-sharing device and said far end.

18. The audio/video signal-sharing device according to claim 1, further comprising an inputting unit, which is coupled to said data-processing unit and enables said data-processing unit to perform corresponding processes according to the instructions sent out by a control device.
